Europäisches Patentamt

European Patent Office

Office européen des brevets

(19)

(11) **EP 0 678 811 B1**

(12) **FASCICULE DE BREVET EUROPEEN**

(45) Date de publication et mention
de la délivrance du brevet:
**30.09.1998  Bulletin 1998/40**

(51) Int Cl.⁶: **G06F 11/00**

(21) Numéro de dépôt: **95400808.2**

(22) Date de dépôt: **11.04.1995**

(54) **Procédé de détection d'interblocages dans les systèmes multiprocesseurs à mémoire partagée**

Verfahren zur Verklemmungserkennung in einem Multiprozessorsystem mit gemeinschaftlichen Speicher

Method of detecting deadlocks in a shared memory multiprocessor system

(84) Etats contractants désignés:
**DE FR GB IT**

(30) Priorité: **18.04.1994  FR 9404578**

(43) Date de publication de la demande:
**25.10.1995  Bulletin 1995/43**

(73) Titulaire: **BULL S.A.**
**78430 Louveciennes (FR)**

(72) Inventeurs:
• **Sanchez, Michel**
  **F-38500 Voiron (FR)**
• **Chervier, Michel**
  **F-38000 Grenoble (FR)**
• **Brugnot, Frédéric**
  **F-38320 Eybens (FR)**

(56) Documents cités:
**EP-A- 0 430 182**        **US-A- 5 297 150**

• **IBM TECHNICAL DISCLOSURE BULLETIN, vol.34, no.5, Octobre 1991, NEW YORK US pages 84 - 89 'Extraction and hierarchical reporting of program linkage relationships'**
• **COMPUTER SYSTEMS, vol.9, no.5, Mai 1989, BROMLEY GB pages 37 - 38 KENNETH DAKIN 'Intelligent testing'**

## Description

L'invention exposée est relative à la détection d'interblocages dans les systèmes multiprocesseurs à mémoire partagée.

Un ensemble de processus est interbloqué si chaque processus de l'ensemble est en attente d'un événement qui ne peut être provoqué que par un autre processus de l'ensemble. Pour un processus donné, un événement type est la prise d'une ressource (_imprimante, mémoire...) utilisée par un autre processus.

Les risques d'interblocages sont plus nombreux en architecture multiprocesseurs qu'en architecture monoprocesseur, en raison du nombre élevé de processus qui s'exécutent en parallèle et font appel aux mêmes ressources. L'apparition d'un interblocage provoque le blocage du système de fonctionnement exécutant les processus.

Des moyens de prévention de l'interblocage sont connus de l'état de la technique. Parmi ceux-ci, on peut citer la constitution d'un ordre hiérarchique préétabli dans l'allocation de ressources. Le respect de cet ordre dans l'appel à ces ressources supprime les risques d'interblocage. Malheureusement, un ordre préétabli n'est pas toujours adapté aux besoins du système.

Sont connues de l'état de la technique les méthodes basées sur l'observation du programme.

Les informations sont recueillies tout au long de l'exécution du programme, puis présentées à l'utilisateur.

Les informations telles que celles relatives aux demandes et libérations de ressources, permettent de trouver les causes d'interblocage. Cependant, la détection des erreurs et l'analyse du comportement se fait visuellement par l'utilisateur, à posteriori, sans aucune interaction avec le programme.

Une autre méthode consiste à sauvegarder l'état global du programme à certains points de son exécution, l'état courant du programme est sauvegardé sur disque sous la forme d'instantanés d'exécution.

Une autre méthode utilisée consiste à retrouver la cause de l'interblocage grâce à l'analyse des registres des piles d'exécution du processus au moment de l'interblocage.

Sont encore connues de l'état de la technique les méthodes interactives dans l'exécution d'un programme.

L'interaction permet par exemple de placer des points d'arrêt dans le programme, de consulter l'état d'un processus ou le contenu des variables. Cette méthode est en général complémentaire de la méthode d'observation du programme suite au recueil d'informations tout au long de l'exécution. L'observation permet une première approche du problème souvent complétée par une ré exécution du programme avec nouvelle interaction pour trouver exactement les causes de l'interblocage.

Sont encore connues de l'état de la technique des méthodes utilisant la détection puis la guérison.

Les méthodes de détection et guérison font en sorte que le système détecte l'interblocage s'il se produit et ensuite essaie de trouver une solution pour sortir de l'interblocage. Cette technique nécessite donc deux étapes, la détection de l'interblocage puis la guérison qui doit amener le système dans un état du processus débloqué.

Si toutes les ressources du système sont différentes, une requête à un type de ressources ne peut être satisfaite que par une seule ressource. Si certaines ressources sont identiques, l'une quelconque de ces ressources peut être utilisée pour satisfaire une requête à ce type de ressource.

Une méthode connue de l'état de la technique consiste en la guérison par désallocation de ressources.

Si la guérison par désallocation de ressources ne pose pas de problème dans le cas de ressources préemptibles, elle est très difficile et souvent impossible avec des ressources non préemptibles. Cette opération requiert souvent une intervention humaine. Prenons pour exemple la désallocation d'une ressource imprimante laser, l'utilisateur après avoir été informé d'un problème d'interblocage, devra retirer les impressions déjà effectuées par le processus en cours. Ce processus sera interrompu, laissant la ressource imprimante à un deuxième processus en attente. Lorsque le deuxième processus libérera la ressource imprimante le processus interrompu reprendra son exécution.

Une autre méthode connue est celle de guérison par destruction de processus.

La façon la plus brutale de casser le cycle de l'interblocage est de tuer un ou, si nécessaire, plusieurs des processus interbloqués.

Il peut aussi être intéressant de tuer un processus ne se trouvant pas dans le cycle mais détenant des ressources attendues par les processus interbloqués. Par exemple, un premier processus possède une ressource imprimante et attend une table traçante, un deuxième processus possède une ressource table traçante et attend une imprimante, nous sommes en présence d'une situation d'interblocage. Si le système possède un troisième processus moins important détenant ces deux ressources, il peut être intéressant de tuer ce dernier afin de débloquer les deux autres.

Dans la mesure du possible il est préférable de détruire les processus dont le coût de destruction est le plus faible, il reste à définir le critère de coût. Les processus les plus sujets à destruction peuvent être, par exemple, les processus dont la ré-exécution depuis le début ne présente aucun dommage, comme la compilation d'un programme qui ne fait que lire un fichier source et produire un fichier objet. Cette compilation peut être interrompue et reprise au début sans dommage, car la première exécution n'a aucune influence sur la deuxième exécution.

Une dernière méthode connue de guérison est celle qui consiste en un retour à un état antérieur.

Cette méthode n'est pas sans danger, en effet les processus détruits peuvent avoir laissé des données dans un état incohérent. Une autre méthode consiste à sauvegarder périodiquement l'état des processus en définissant des points de reprise correspondant à des états jugés significatifs. Pour effectuer la guérison, suite à la détection d'un interblocage, un processus détenant des ressources attendues par les processus interbloqués, est ré-exécuté depuis un point de reprise antérieur à l'obtention de ces ressources. Tous les travaux, effectués par ce processus depuis le point de reprise de ré-exécution, sont perdus et les ressources de ce processus sont libérées. Ainsi les processus interbloqués pourront obtenir leurs ressources, le processus ré-exécuté en partie sera mis en attente lorsqu'il demandera les ressources qu'il a perdues.

Les méthodes citées, pour répondre à un problème d'interblocage, ne donnent pas entière satisfaction. C'est pourquoi l'invention propose un procédé de traitement préventif des fichiers sources qui évite l'apparition d'interblocages dans le déroulement de processus.

Or, il est connu de E.G. Coffman et al., dans "System deadlocks", ACM Computing Surveys, Vol.3, June 1971, pages 67 à 78, que quatre conditions sont nécessaires et suffisantes pour provoquer un interblocage. La première condition est que les ressources soient utilisées en exclusion mutuelle. La seconde condition est que chaque processus utilise simultanément plusieurs ressources, et acquiert chaque ressource à mesure de ses besoins, sans libérer celles qu'il possède déjà. La troisième condition est que les allocations de ressources soient bloquantes par des prises de verrous, et que les ressources ne puissent être réquisitionnées, c'est à dire qu'elles soient non préemptibles. La quatrième condition est qu'il existe une suite de processus p0 à pn, telle que chaque processus attende une ressource occupée par le suivant, le dernier processus attendant une ressource occupée par le premier.

L'invention s'applique, préférentiellement mais non exclusivement, aux systèmes dont les allocations de ressources répondent aux trois premières conditions de Coffman et al. et dont on souhaite que la quatrième condition ne soit jamais remplie.

L'invention concerne un analyseur statique des risques de blocage de fonctionnement d'un système.

Cet analyseur produit les listes de prises de verrous, associées à des allocations de ressources au système, vérifiant les conditions de Coffman. Cet analyseur produit également le nom des programmes sources dont ces listes sont extraites. Ceci permet au constructeur du système de modifier ses programmes sources pour éliminer les risques d'interblocage entre les différents processus du système. Le constructeur du système s'assurera ainsi qu'aucune allocation de ressources ne sera blocante, quelles que soient les synchronisations des différents processus s'exécutant sur le système.

L'invention a pour but d'éliminer les risques d'interblocage entre différents processus d'un système dès la conception de ce système en laissant le maximum possible de libertés dans cette conception. En particulier, une plus grande souplesse est offerte dans la conception d'un système si, non fixées à priori de façon contraignantes, les hiérarchies de prises de verrous peuvent être considérées selon les besoins réels d'allocations de ressources de ce système. Ceci est réalisé grâce à un outil d'analyse statique des risques de blocage de fonctionnement d'un système tel que revendiqué dans la revendication 1 recevant en entrée les fichiers de programmation de ce système et la nomenclature des fonctions primitives de prise et de libération de verrous de ce même système, produisant des messages permettant d'éliminer les risques d'interblocage avant la mise en marche de ce système. Cet analyseur est caractérisé en ce qu'il comprend un premier outil qui produit un graphe de contrôle pour chaque fonction d'appel système contenue dans les fichiers de programmation, les étapes de ce graphe de contrôle ne comprenant que les fonctions primitives de la nomenclature utilisant des ressources du système, un second outil générant les listes de prises de verrous pour i'ensemble des synchronisations possibles des différents processus du système, et en ce que le second outil met en oeuvre un algorithme de parcours des graphes produits par le premier outil, cet algorithme faisant appel à une fonction récursive "Parcours" s'appliquant à au moins deux paramètres, le noeud courant du graphe parcouru, la liste mère LM des verrous pris et non libérés pour les noeuds du graphe précédemment parcourus, et en ce que, à chaque rencontre d'un noeud contenant une libération de verrou, la liste mère LM telle qu'existante avant la rencontre de ce noeud, est mémorisée dans une liste fille figée LF.

A chaque prise de ressource par un processus à un instant t correspond une prise de verrou interdisant aux autres processus de prendre cette ressource. En constituant les listes de prises de verrous telles qu'elles sont codées, il est donc nécessaire que l'ensemble de ces listes vérifie une relation d'ordre. Après obtention de toutes les listes, en les reliant entre elles par les verrous qui leur sont communs, il est possible de détecter des cycles. Or, une liste bouclée par un cycle ne peut vérifier une relation d'ordre. Un inconvénient des architectures multiprocesseurs est dans l'appréhension du séquencement de différents processus en tout ou en partie indépendants.

L'invention permet de pouvoir considérer le cas le plus défavorable où toutes les instructions s'exécutent en parallèle. Cette idée est particulièrement adaptée au noyau Unix (Unix est une marque déposée aux Etats-Unis et dans d'autres pays, licenciée exclusivement par X/Open Company Limited). La simulation d'une exécution parallèle de toutes les instructions est réalisée par le second outil.

La complexité du système, à la conception duquel s'applique l'analyseur statique conforme à l'invention, est telle que le temps nécessaire à l'obtention des résultats risque d'être trop long pour être acceptable. Or, dans la mise en oeuvre de cet analyseur statique, les inventeurs ont observé une redondance de résultats produits corrélée à l'augmentation de la durée du temps nécessaire à leur obtention.

L'invention permet aussi de réduire le temps nécessaire à l'obtention des résultats en éliminant leurs redondances au fur et à mesure des causes de leurs apparitions. Ceci est réalisé grâce au fait que chaque noeud de raccordement NJ du graphe contient la mémorisation de toutes les listes mères LM différentes générées par la fonction "Parcours" aux passages précédents sur ce noeud, et par le fait que la fonction "Parcours" effectue un retour de récursivité si la liste mère LM courante est égale à l'une des listes mères LM mémorisées.

L'invention procure également un moyen d'éviter les bruits dans les résultats fournis par l'analyseur statique. Un bruit est constitué par la détection d'une erreur qui n'en est pas une. Ceci est réalisé dans la fonction de détection de cycle, dont l'étiquette en abrégé est DETECT_CYCLE, par:

- une étape définissant un noeud NF comme le premier adressé par le pointeur réciproque DF contenu dans le noeud NO,
- une première boucle masquant tous les successeurs du noeud NF dans une même liste, avant l'appel récursif de la fonction pour le successeur du noeud NO,
- une seconde boucle démasquant tous les successeurs du noeud NF dans une même liste, après l'appel récursif de la fonction pour le successeur du noeud NO,
- une étape d'appel récursif de la fonction pour le noeud NF.

D'autres caractéristiques et avantages de la présente invention, notamment des détails de réalisation à l'aide d'algorithmes, apparaîtront plus clairement à la lecture de la description faite ci-après en référence aux dessins ci-joints dans lesquels:

La figure 1 représente l'architecture d'un analyseur statique conforme à l'invention.

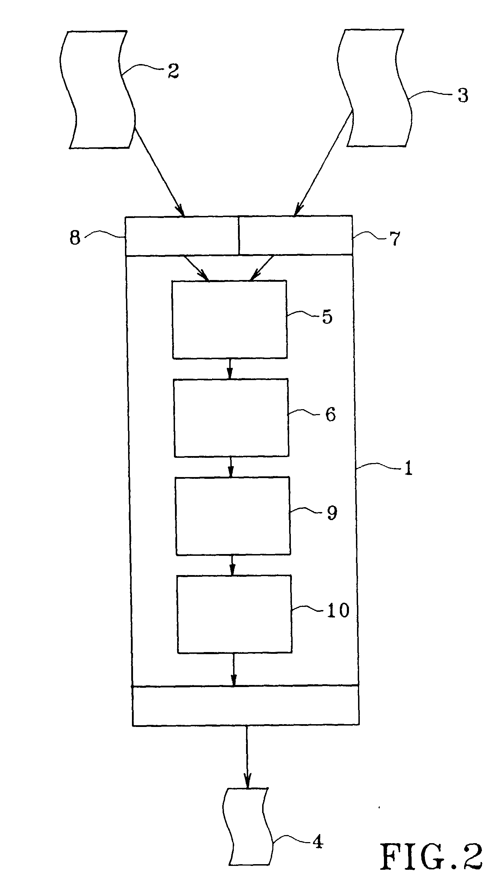

La figure 2 représente l'architecture d'un analyseur utilisant des particularités supplémentaires de l'invention.

Les figures 3 et 4 représentent des exemples symbolisés de résultats intermédiaires possibles de l'invention.

La figure 5 représente un exemple symbolisé de graphe de prises de verrous.

La figure 6 représente l'algorithme mis en oeuvre par l'outil (10) de l'analyseur statique, objet de l'invention.

L'annexe présente l'algorithme Parcours permettant la création de listes de prises de verrous.

Un système informatique est muni d'instructions permettant le traitement des informations qui lui sont soumises. Ces instructions sont d'abord programmées dans un langage évolué, suivant les règles de l'art connu. Le contenu des programmes ainsi élaborés est disponible dans des fichiers sources à partir desquels un compilateur génère des séquences en langage machine, directement exécutables par les divers éléments du système.

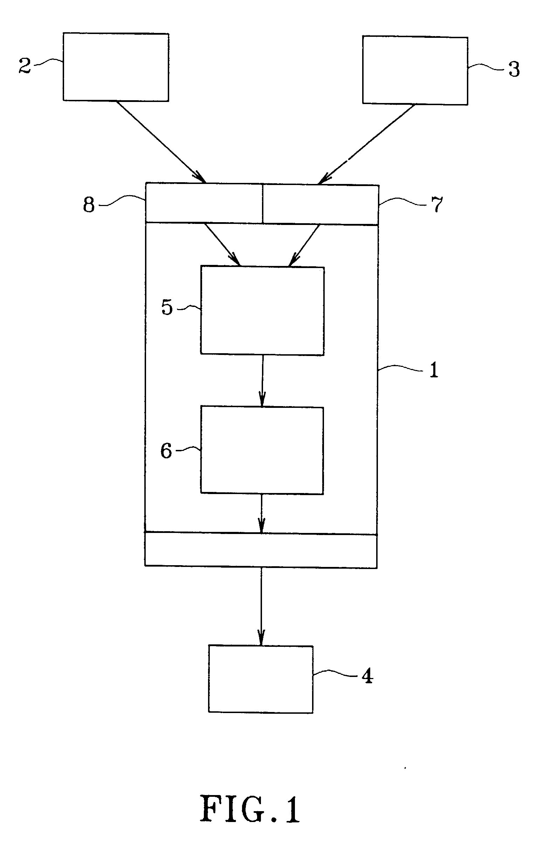

La figure 1 représente l'architecture générale d'un analyseur statique conforme à l'invention. L'analyseur statique (1), objet de l'invention, est mis en oeuvre, dans cet exemple, à l'aide d'un ordinateur. Il dispose d'une part, dans un fichier (8), des arbres de contrôle de chacune des fonctions primitives contenues dans les fichiers sources à traiter. L'obtention de ces arbres de contrôle à partir des fichiers sources ne pose aucune difficulté à l'homme du métier. Il lui est par exemple possible d'utiliser l'outil de compilation (2) adapté au langage dans lequel sont écrits ses fichiers sources. L'analyseur dispose d'autre part dans un fichier (7) de la liste (3) des prises de verrous attribuées aux ressources du système, avec pour chacune de ces prises de verrous, son nom et ses liens syntaxiques au sein du langage de programmation.

L'analyseur statique (1) comprend essentiellement quatre outils (5,6,9,10). L'outil (5) a pour fonction de générer un graphe de contrôle à partir des éléments contenus dans les fichiers (7) et (8). L'outil (6) a pour fonction de générer un ensemble de listes de prises de verrous à partir du graphe de contrôle fourni par l'outil (5). L'outil (9) a pour fonction de générer un graphe de prises de verrous à partir des listes de prises de verrous élaborées par l'outil (5). L'outil (10) a pour fonction de traiter le graphe de prises de verrous élaboré par l'outil (9) pour signaler les séquences de prises de verrous possibles, ne vérifiant pas une relation d'ordre. Ces séquences, si elles existent, sont éditées via un moyen d'interface (4), pour être exploitées en vue de modifier les programmes source, traités par l'outil (1), pour éviter tout interblocage entre les processus qui feront appel aux fonctions codées par ces programmes source.

Nous allons décrire maintenant, plus en détail, les moyens mis en oeuvre par ces différents outils et comment ces moyens agissent pour obtenir le résultat attendu.

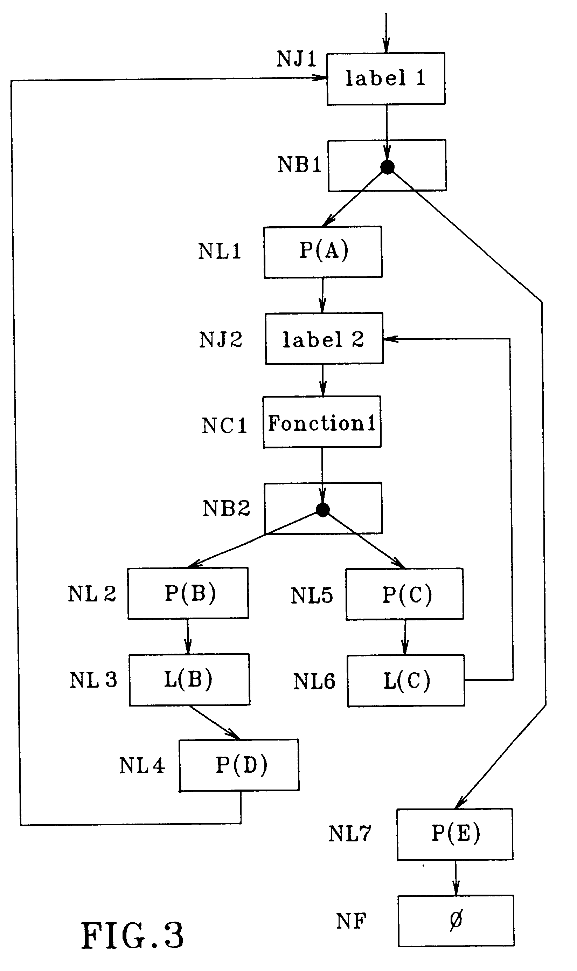

Un exemple de graphe de contrôle généré par l'outil (5) est donné dans la figure 3. La structure d'un arbre de contrôle, tel que contenu dans le fichier (8), est connue de l'homme de l'art. Un tel arbre est constitué de noeuds, de branches issues de ces noeuds et de feuilles. Les branches sont de constitution identique à celle d'un arbre et les feuilles sont de constitution identique à celle d'un noeud avec pour seule différence le fait qu'aucune branche n'est issue d'une feuille. Chaque noeud contient un mot clé, un symbole ou un identificateur. Une feuille ne contient en général qu'un identificateur. L'outil (5) construit le graphe de contrôle sous forme d'une liste, à l'aide d'un algorithme de parcours de l'arbre de contrôle. Les algorithmes de parcours d'un arbre de contrôle sont connus, ils font essentiellement appel à des méthodes récursives. En parcourant successivement chaque arbre de contrôle contenu dans le fichier (8), l'outil (5) analyse chacune de ses branches en se référant aux données lexicographiques et syntaxiques du fichier (7).

Lors d'un premier parcours de l'arbre de contrôle, à chaque rencontre d'un mot clé représentatif d'une connexion, typiquement et à titre non limitatif un GO_TO en langage Fortran, l'outil (5) ajoute dans une table des étiquettes, l'identificateur succédant directement dans l'arbre de contrôle à un tel mot clé, si cet identificateur n'est pas déjà compris dans la table des étiquettes.

Lors d'un second parcours du même arbre de contrôle:

- A chaque rencontre d'un mot clé représentatif d'une prise de verrou, l'outil (5) ajoute un noeud NL à la liste du graphe de contrôle. Ce noeud NL contient l'identificateur du verrou associé à la prise rencontrée ainsi que l'identificateur du programme source dont est issu l'arbre de contrôle. Dans l'arbre de contrôle, l'identificateur de verrou succède généralement directement au mot clé représentatif d'une prise de verrou.
- A chaque rencontre d'un identificateur d'étiquette, l'outil (5) donne pour successeur à l'élément courant de la liste du graphe de contrôle, l'adresse où est contenue cet identificateur dans la table des étiquettes, à laquelle il alloue comme successeur la tête d'espace libre. Il ajoute ainsi un noeud NJ à la liste du graphe de contrôle.
- A chaque rencontre d'un mot clé représentatif d'un branchement conditionnel, l'outil (5) donne autant de successeurs à l'élément courant de la liste du graphe qu'il détecte de branchements. Par récursivité, il construit ensuite les sous-listes liées à chaque successeur.
- A chaque rencontre d'un mot clé représentatif d'une connexion, l'outil (5) donne pour successeur à l'élément courant de la liste du graphe de contrôle, l'adresse où est contenue l'identificateur correspondant dans la table des étiquettes, refermant ainsi le graphe de contrôle sur un noeud NJ.
- A chaque rencontre d'un symbole d'affectation de variable, l'outil (5) ajoute un noeud NA à la liste du graphe de contrôle. Ce noeud NA contient l'ensemble des expressions arithmétiques liées à ce symbole d'affectation.

Ensuite, l'outil (5) parcourt le graphe de contrôle et, pour chaque noeud NA, il détermine à l'aide des données contenues dans le fichier (7), les variables de l'expression arithmétique dont la valeur correspond à un nom de verrou. Si cette valeur correspond à un nom de verrou, la variable est remplacée par ce nom de verrou à chacune de ses apparitions incidente dans le graphe de contrôle. Si aucune valeur de variable ne correspond à un nom de verrou, le noeud NA est supprimé du graphe de contrôle.

Il n'est pas impératif de retenir d'autres mots clé, symboles ou identificateurs que ceux décrits ci-dessus pour la construction du graphe de contrôle. Le fichier (7) doit donc contenir au moins les identificateurs de verrous liés aux prises de ressources du système, les mots clé représentant les branchements conditionnels, les connexions, les appels de fonctions et les prises de verrous, et les symboles représentant les affectations de variables. Le fichier (7) contient en outre la syntaxe liée à ces éléments.

Dans la figure 3, les étapes du graphe de contrôle, appelées noeuds dans la suite de la description, sont représentées par des cases et les transitions par des flèches, reliant ces différentes cases et indiquant le sens de parcours du graphe. Cette représentation n'est pas propre à l'invention et toute autre représentation est aussi valable. On y reconnaît essentiellement quatre types de noeuds: les noeuds de branchement NB, les noeuds de raccordement NJ, les noeuds d'appel de fonction NC et les noeuds de prise ou de libération de verrous NL. On peut trouver d'autres types de noeuds dans le graphe de contrôle généré à partir de l'arbre de contrôle, tel que par exemple des noeuds d'expression arithmétiques NA. Ce type de noeuds n'existe que dans la mesure où il met en cause un identificateur de verrou. Les noeuds de branchement NB induisent un éclatement du graphe de contrôle en ce qu'ils induisent le branchement sur différent noeuds fils en fonction de critères logiques définis dans ces noeuds. A l'inverse, les noeuds de raccordement NJ rassemblent différentes branches du graphe de contrôle en joignant par exemple le noeud NL contenant le terme "P(D)" au noeud NJ contenant le terme "label 1" sur la figure 3. On appelle chemin une suite alternée de transitions et de noeuds; par exemple sur la figure 3, la suite des noeuds NL, NJ, NC, NB, contenant respectivement les termes "P(A)", "label 2", "fonction1" et l'éclatement vers deux noeuds fils d'une part, et les transitions reliant les noeuds NL, NJ, NC, NB d'autre part, constituent une branche du graphe de cette figure. Les noeuds d'appel de fonction NC permettent le branchement sur le graphe de contrôle de la fonction appelée, et le passage à la transition suivante de ce même noeud NC à la fin du graphe de contrôle de la fonction appelée. Les liaisons ainsi établies entre différents graphes élémentaires créent le graphe de contrôle complet de l'exécution d'un programme. Les noeuds de prise et de libération de verrous NL sont ceux qui nous intéressent plus directement dans le cadre de l'invention. A chaque fois que l'exécution d'un processus nécessite une ressource partagée du système, le déroulement du graphe de contrôle de ce processus passe par une étape de prise d'un verrou lié à cette ressource. Ceci a pour but d'éviter à un autre processus d'accéder simultanément à la même ressource et d'empêcher ainsi le bon usage de cette ressource par le premier processus qui se l'est allouée. A la fin de l'utilisation de cette ressource, le processus qui se l'était allouée doit libérer le verrou pris pour permettre à un autre processus ou à une étape ultérieure du même processus d'utiliser cette ressource. On voit par exemple sur la figure 3, deux noeuds successifs NL contenant les termes "P(B)" et "L(B)" pour une prise du verrou B, respectivement la libération du verrou B.

Enfin, l'outil (5) simplifie le graphe de contrôle de façon à ce que ce dernier ne possède plus que des branches contenant des prises et des libérations de verrous. Ainsi, les noeuds NC d'appel de fonction, lorsque ces fonctions ne manipulent pas de prises ou de libération de verrous sont supprimés du graphe. Le terme contenu dans chaque noeud NC constitue en fait l'identificateur du point d'entrée du graphe de contrôle de la fonction appelée par ce noeud. L'outil (5) fait correspondre les variables manipulées par les prises et les libérations de verrous à des variables globales. Rappelons qu'une variable est appelée globale lorsque son identificateur dans un sous programme est le même que dans le programme principal. De même, l'outil (5) simplifie la table des symboles de chaque fichier source pour ne garder que les symboles liés aux opérations de synchronisation et aux appels de fonctions. Cette table de symboles est conservée dans le fichier (7). On comprend mieux le résultat de cette opération sur l'exemple de la figure 3 où le premier noeud NB succédant au noeud NJ contenant le terme "label1" sera supprimé, ce noeud NJ ayant directement pour successeurs le noeud NL contenant P(A) et le Noeud NL contenant P(E). De même, le noeud NC contenant le terme "Fonction1" aura pour successeurs directs le noeud NL contenant le terme "P(B)" et le noeud NL contenant le terme "P(C)". Suivant une procédure identique, les noeuds NJ sont également supprimés, Le noeud NL contenant le terme "L(C)" aura pour successeur direct le noeud NC contenant le terme "Fonction1", le noeud NL contenant le terme P(D) aura pour successeurs directs les noeuds NL contenant P(A) et NL contenant P(E). Chaque graphe est terminé par un noeud NF contenant un symbole de fin, par exemple ∅.

L'outil (5) met ainsi à disposition de l'outil (6), l'ensemble de tous les graphes de contrôles créés à partir du fichier source, et ceci dans leur plus simple expression.

L'outil (6) parcourt séparément chaque graphe de contrôle mis à disposition par l'outil (5) . Ces parcours séparés simulent des exécutions parallèles des différentes tâches liées à chacun de ces graphes. En n'attribuant aucun ordre de synchronisme à priori de ces tâches, on envisage le cas le plus défavorable d'appels simultanés à des ressources partagées. L'intérêt de l'analyseur statique (1) est qu'en évitant les blocages résultants de ce cas de figure, on est sur d'éviter tout blocage, quelque soit l'ordre séquentiel d'enchaînement de ces tâches, résultant du processus.

En parcourant chaque graphe de contrôle, l'outil (6) crée et modifie une liste appelée liste mère. Il construit cette liste mère de la manière suivante. A chaque rencontre d'un noeud NL contenant une prise de verrou, cette prise de verrou est rajoutée à la liste mère. A chaque rencontre d'un noeud NL contenant une libération de verrou, toutes les prises de verrou existantes à ce moment dans la liste mère sont conservées dans une liste fille. En conséquence, à chaque nouvelle libération d'un verrou, une nouvelle liste fille est créée. Ensuite, la prise de verrou correspondante à cette libération est supprimée de la liste mère. Les listes filles sont figées, à la différence de la liste mère qui évolue en permanence au gré des prises et des libérations de verrous. Il est intéressant de noter qu'une liste fille ne contient que des prises de verrous. L'ensemble des listes filles correspond à l'ensemble des listes de prises de verrous et représente toutes les combinaisons possibles de prises de verrous lors de l'exécution de programmes.

Le parcours du graphe de contrôle se fait à l'aide d'une fonction récursive appelée "Parcours". Cette fonction s'applique à trois variables globales: le noeud courant, la liste mère courante et l'ensemble des listes mères en suspens. Les listes mères en suspens sont définies dans l'algorithme de la fonction "Parcours". L'algorithme est le suivant:

- Si le noeud est de type NF, alors la liste mère courante est ajoutée à l'ensemble des listes mères en suspens si et seulement si une liste mère identique n'est pas déjà contenue dans cet ensemble, le parcours est terminé.
- Si le noeud est de type NB, alors la fonction "Parcours" est appelée pour le successeur gauche du noeud puis elle est appelée pour le successeur droit du noeud.
- Si le noeud est de type NJ, une marque étant affectée à ce noeud, alors si la marque du noeud est égale à 2, le parcours est terminé, sinon la marque du noeud est incrémentée, la fonction "Parcours" est appelée pour le successeur du noeud et la marque de ce noeud est décrémentée.
- Si le noeud est de type NA, alors la fonction "Parcours" est appelée pour le successeur du noeud.
- Si le noeud est de type NL, alors si il contient une libération de verrou, la liste mère est copiée dans une nouvelle liste de prise de verrous et la prise de verrou la plus récente correspondante à la libération est enlevée de la liste mère, sinon le contenu du noeud NL est ajouté à la liste mère et la fonction "Parcours" est appelée pour le successeur du noeud.
- Si le noeud est de type NC, alors la fonction "Parcours" est appelée pour le noeud d'entrée du graphe de la fonction. Au noeud NC est associé un ensemble appelé ensemble des listes en suspens. A chaque retour de la fonction appelée, la liste mère LM est conservée dans cet ensemble si elle est différente des listes mères déjà contenues dans cet ensemble. La fonction "Parcours" est appelée, autant de fois qu'il est nécessaire, pour le successeur du noeud, avec comme liste mère courante chacune des listes mères en suspens.

A chaque entrée dans un nouveau graphe, l'appel de la fonction "Parcours" se fait avec le noeud d'entrée du graphe, une liste mère vide et un ensemble de listes mères en suspens vide. D'autre part, chacune des listes mères en suspens, restante dans l'ensemble des listes mères en suspens en fin de parcours du graphe, est recopiée dans une liste de prise de verrou, encore nommée liste fille.

En reprenant la lecture de l'algorithme décrit ci dessus, nous remarquons que l'ensemble des listes mères en suspens est accru d'une nouvelle liste mère en suspens si le noeud est de type NF, c'est à dire, si le parcours du graphe considéré est terminé. En fait, à la fin du parcours du graphe de l'appel système, les listes mères en suspens doivent être vides. Dans le cas contraire, cela indique que des verrous n'ont pas été libérés à la fin de l'appel système. Ceci est dû à une erreur de programmation du fichier source étudié par l'analyseur (1) ou à un bruit. Lorsque l'outil détecte une erreur qui n'en est pas une, ceci constitue un bruit. Comme nous le verrons par la suite, l'invention propose des moyens de suppression de bruit.

L'utilité de l'ensemble des listes mères en suspens ressort de la condition où le noeud est de type NC. En effet, le graphe d'une fonction peut se terminer par plusieurs noeuds NF différents suivant les branchements conditionnels intérieurs à cette fonction. Il est alors nécessaire d'étudier l'évolution de la liste mère du graphe ayant appelé cette fonction pour chacune des évolutions de cette liste mère à l'intérieur de cette fonction.

La marque affectée à un noeud de type NJ sert à parcourir deux fois et seulement deux fois les branches en aval de ce noeud jusqu'à leur rebouclage éventuel sur celui-ci. Ceci permet de détecter les interblocages potentiels d'une exécution cyclique du graphe. Pour comprendre l'importance de ce type de détection, il faut avoir présent à l'esprit que le graphe est représentatif d'une fonction d'appel système et que plusieurs processus peuvent recourir indépendamment à cette même fonction. Si différents processus s'exécutent en parallèle, il est possible qu'ils enchaînent les étapes d'une fonction, correspondantes aux noeuds d'une même boucle d'un graphe de contrôle. La succession de deux parcours du graphe de contrôle permet de mettre en évidence l'interblocage entre deux processus dont les prises de verrous s'enchaînent selon l'ordre décrit dans la boucle du graphe de contrôle. Deux parcours suffisent car la double prise d'un même verrou est détectée dès le second parcours.

A titre d'exemple, appliquons la partie du procédé que nous venons de décrire au graphe de contrôle de la figure 3. Ceci permet de suivre l'évolution de la liste mère LM, en démarrant le parcours du graphe au noeud NJ1 contenant le terme "label 1", et de suivre la création des n listes filles LF1, LF2, ..., LFn à partir de cette liste mère.

Le noeud étant de type NJ, la marque du noeud, initialement nulle, est incrémentée à 1, la fonction Parcours (NB1,$\varnothing$,$\varnothing$) est alors appelée.

Au noeud NB1, la fonction Parcours(NL1,$\varnothing$,$\varnothing$) est appelée, au retour de récursivité, la fonction Parcours(NL7,$\varnothing$,$\varnothing$) sera ensuite appelée, mais nous ne développerons pas cette branche, inutile à la présente explication.

Au noeud NL1, LM = { P(A) }, la fonction Parcours(NJ2,{P(A)},$\varnothing$) est alors appelée.

Au noeud NJ2, la marque du noeud, initialement nulle, est incrémentée à 1, la fonction Parcours(NC1,{P(A)},$\varnothing$) est alors appelée.

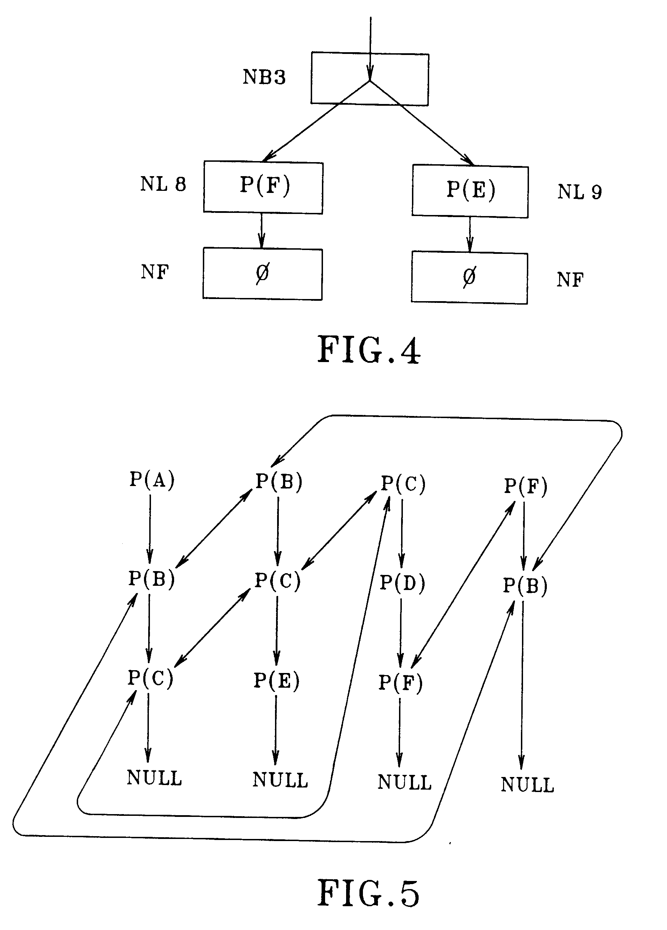

Au noeud NC1, si par exemple, Fonction1 constitue un appel du graphe de la figure 4, la fonction Parcours(NB3,{P(A)},$\varnothing$) est alors appelée.

Au noeud NB3, la fonction Parcours(NL8,{P(A)},$\varnothing$) est appelée; au retour de récursivité, la fonction Parcours (NL9,{P(A)},$\varnothing$) est ensuite appelée.

Au noeud NL8, LM = { P(A), P(F) }, la fonction Parcours(NF,{P(A),P(F)},$\varnothing$) est alors appelée. La liste mère {P(A),P(F)} est ajoutée à l'ensemble des listes mères en suspens jusqu'à présent vide. Parcours(NF,{P(A),P(F)},{P(A),P(F)}) est terminée et par retour de récursivité, Parcours(NL8,{P(A)},{P(A),P(F)}) est aussi terminée.

Au noeud NL9, LM = { P(A), P(E) }, la fonction Parcours(NF,{P(A),P(E)},$\varnothing$) est alors appelée. La liste mère {P(A),P(E)} est ajoutée à l'ensemble des listes mères en suspens jusqu'à présent vide. Parcours(NF,{P(A),P(E)},{P(A),P(E)}) est terminée et par retour de récursivité, Parcours(NL9,{P(A)},{P(A),P(E)}) est aussi terminée.

Enfin, la fonction Parcours(NB3,{P(A)},{{P(A),P(F)},{P(A),P(E)}}) est terminée par retour de récursivité.

Toujours au noeud NC1, la liste mère courante est remplacée par chacune des listes mères en suspens et les fonctions Parcours(NB2,{P(A),P(F)},$\varnothing$) et Parcours(NB2,{P(A),P(E)},$\varnothing$) sont appelées.

Au noeud NB2, la fonction Parcours(NL2,{P(A),P(F)},$\varnothing$) est appelée, au retour de récursivité, la fonction Parcours (NL5,{P(A),P(F)},$\varnothing$) sera ensuite appelée, mais nous ne développerons pas cette branche, inutile à la présente explication.

Au noeud NL2, LM = {P(A),P(F),P(B)}, la fonction Parcours(NL3,{P(A),P(F),P(B)}, $\varnothing$) est alors appelée.

Au noeud NL3, celui-ci contient une libération de verrou L(B), la liste fille LF1 = {P(A),P(F),P(B)} est créée, LM = {P(A),P(F)}, la fonction Parcours(NL4,{P(A),P(F)},$\varnothing$) est appelée.

Au noeud NL4, LM = {P(A),P(F),P(D)}, la fonction Parcours(NJ1,{P(A),P(F),P(D)},$\varnothing$) est appelée.

Au noeud NJ1, la marque du noeud, précédemment mise à 1, est incrémentée à 2, la fonction Parcours(NB1,{P(A),P(F),P(D)},$\varnothing$) est appelée.

Au noeud NB1, la fonction Parcours(NL1,{P(A),P(F),P(D)},$\varnothing$) est appelée, au retour de récursivité, la fonction Parcours (NL7,{P(A),P(F),P(D)},$\varnothing$) sera ensuite appelée, mais nous ne développerons pas cette branche, inutile à la présente explication..

Au noeud NL1, LM = {P(A),P(F),P(D),P(A)}, la fonction Parcours(NJ2,{P(A),P(F),P(D),P(A)},$\varnothing$) est appelée.

Au noeud NJ2, la marque du noeud, précédemment mise à 1, est incrémentée à 2, la fonction Parcours(NC1,{P(A),P(F),P(D),P(A)},∅) est appelée.

Au noeud NC1, la fonction 1 constituant un appel du graphe de la figure 4, la fonction Parcours(NB3,{P(A),P(F),P(D), P(A)},∅), est appelée. Le parcours est identique au parcours décrit ci-dessus. Finalement, on ressort de ce parcours avec les listes mères en suspens suivantes: {P(A),P(F),P(D),P(A),P(F)} et {P(A),P(F),P(D),P(A),P(E)}.

Toujours au noeud NC1, la liste mère courante est remplacée par chacune des listes mères en suspens et les fonctions Parcours(NB2,{P(A),P(F),P(D),P(A),P(F)},∅) et Parcours(NB2,{P(A),P(F),P(D),P(A),P(E)},∅) sont appelées.

Au noeud NB2, la fonction Parcours(NL2,{P(A),P(F),P(D),P(A),P(F)},∅) est appelée, au retour de récursivité, la fonction Parcours(NL5,{P(A),P(F),P(D),P(A),P(F)},∅) sera ensuite appelée, mais nous ne développerons pas cette branche, inutile à la présente explication.

Au noeud NL2, LM = {P(A),P(F),P(D),P(A),P(F),P(B)}, la fonction Parcours(NL3,{P(A),P(F),P(D),P(A),P(F),P(B)}, ∅) est alors appelée.

Au noeud NL3, celui-ci contient une libération de verrou L(B), la liste fille LF2 = {P(A),P(F),P(D),P(A),P(F),P(B)} est créée, LM = {P(A),P(F),P(D),P(A),P(F)}, la fonction Parcours(NL4,{P(A),P(F),P(D),P(A),P(F)},∅) est appelée.

Au noeud NL4, LM = {P(A),P(F),P(D),P(A),P(F),P(D)}, la fonction Parcours(NJ1,{P(A),P(F),P(D),P(A),P(F),P(D)}, ∅) est appelée.

Au noeud NJ1, la marque du noeud, précédemment mise à 2, le parcours est terminé. Ceci provoque le retour de récursivité au noeud NL4, puis aux noeuds NL3, NL2, NB2.

Au noeud NB2, la fonction Parcours(NL5,{P(A),P(F),P(D),P(A),P(F)},∅) est appelée, mais, comme précisé ci-dessus, nous ne détaillons pas ce parcours pour alléger l'explication. Le retour de récursivité se poursuit au noeud NC1, puis au noeud NJ2 où la marque est alors décrémentée à un. Le retour de récursivité se poursuit encore au noeud NL1, puis au noeud NB1. Au noeud NB1, nous ne détaillons pas l'appel de la fonction Parcours(NL7,{P(A),P(F),P(D)},∅). Au retour de récursivité sur le noeud NJ1, la marque est décrémentée à un. Le retour de récursivité se poursuit ensuite, comme décrit ci-dessus, à travers les noeuds NL4, NL2, NB2, NC1, NJ2 où la marque est remise à zéro, NL1, NB1 et enfin NJ1 où la marque est remise à zéro et où le premier appel à parcours se termine.

Une variante de la fonction "Parcours" est dans l'introduction d'un indicateur supplémentaire dans l'exécution de cette fonction: l'ensemble des différentes listes mères en amont d'un noeud NJ. Dans l'algorithme de la fonction, décrit ci-dessus, la condition où le noeud est de type NJ est modifiée comme suit:

- Si le noeud est de type NJ, un ensemble des différentes listes mères apparues lors de rencontres précédentes de ce noeud NJ étant constitué, alors

  - si la liste mère courante est comprise dans cet ensemble, le parcours est terminé, la marque du noeud est mise à zéro,
  - sinon la liste mère courante est ajoutée à cet ensemble et, une marque étant affectée à ce noeud, alors si la marque du noeud est égale à 2, le parcours est terminé, sinon la marque du noeud est incrémentée, la fonction "Parcours" est appelée pour le successeur du noeud et la marque de ce noeud est décrémentée.

L'intérêt de cette variante est en ce qu'elle permet de réduire considérablement le temps d'exécution de la fonction "Parcours". En effet, à chaque chemin du graphe de contrôle aboutissant au noeud NJ considéré, correspond une liste mère courante. Il est donc à priori nécessaire, pour chacun de ces chemins, d'étudier l'évolution de la liste mère pour le parcours du graphe de contrôle en aval du noeud NJ. Sans la variante de l'algorithme de la fonction "Parcours" introduite ci-dessus, si n chemins du graphe de contrôle aboutissent au noeud NJ, la partie du graphe en aval de ce noeud est parcourue intégralement et systématiquement n fois. Cependant, pour chaque rencontre d'un même noeud NJ, l'évolution de la liste mère en aval de ce noeud est toujours la même. Donc deux listes mères identiques, précédant la rencontre du noeud NJ, donnent deux listes mères identiques succédant à cette rencontre. Ces listes mères identiques généreront les mêmes listes filles et ne présentent donc pas d'intérêt. Si m listes mères sont identiques à l'une des n-m listes mères précédemment construites, la variante décrite permet de réduire le nombre d'appels récursifs à la fonction "Parcours" à n-m.

L'outil (6) a créé ainsi l'ensemble des listes de prises de verrous possibles dans l'exécution des programmes sources soumis à l'analyseur statique (1). Ces listes de verrous contiennent au droit de chaque prise de verrou, le nom du fichier source à leur origine. Ceci est réalisé à partir du contenu des noeuds de type NL.

On appelle liste préfixe d'une liste L, toute liste constituant une troncature des derniers éléments de la liste L, suivant l'ordre d'écriture de cette liste. Ainsi la liste { P(A), P(B) } est une liste préfixe de la liste { P(A), P(B), P(C) }, mais la liste { P(B), P(C) } n'en est pas une. L'outil (6) passe en revue l'ensemble des listes de prises de verrous et élimine toutes les listes préfixes de chaque liste de prises de verrou, en effet une liste préfixe n'amène pas d'information supplémentaire sur l'ordre des prises de verrous par le système. Ceci permet de réduire l'ensemble des listes de prises de verrous.

La figure 5 représente l'échantillon d'un résultat possible fourni par l'outil 6. L'outil 9 relie de façon bidirectionnelle les différentes listes filles entre elles au niveau des prises de verrous communes. Ce traitement des listes filles LF se fait à l'aide de l'algorithme qui suit.

Une liste fille LF est une suite de noeuds occupés chacun par une prise de verrou P(x) et le nom du programme source à l'origine de cette prise de verrou. De plus, un ensemble de pointeurs "Double_flèche" est ajouté dans chacun de ces noeuds. Pour chacun de ces noeuds, l'ensemble de pointeurs "Double_flèche" est initialisé à l'ensemble vide. Dans chaque liste fille LF, parcourir les prises de verrou P(x) de cette liste.

Pour chaque prise de verrou P(x), parcourir les prises de verrou P(y) dans chacune des autres listes fille LF.

Si P(y) = P(x), alors,

Si le noeud occupé par P(y) est déjà affecté d'un pointeur "Double_flèche" vers celui occupé par P(x), passer à la prise de verrou P(y) suivante de l'autre liste fille ou à une nouvelle autre liste fille si P(y) était sa dernière prise de verrou.

Sinon, ajouter dans l'ensemble des pointeurs "Double_flèche" du noeud occupé par P(x), un pointeur vers le noeud occupé par P(y) et un pointeur réciproque vers le noeud occupé par P(x) dans l'ensemble des pointeurs "Double_flèche" du noeud occupé par P(y),

Sinon, passer à un noeud suivant ou à une liste fille suivante.

Un exemple de résultat intermédiaire, après traitement par l'outil 9 de l'ensemble de listes LF, est représenté symboliquement sur la figure 5. Ainsi, les prises de verrous P(B) des listes LF1, LF2 et LF4 sont reliées par des double-flèches. Les prises de verrous P(C) des listes LF1, LF2 et LF3 sont reliées par des double-flèches. Les prises de verrous P(F) des listes LF3 et LF4 sont reliées par des double-flèches. Il existe donc un cycle passant par P(B) et P(C) dans LF2, par P(C), P(D) et P(F) dans LF3 puis par P(F) et P(B) dans LF4 qui se reboucle sur P(B) dans LF2. Un tel cycle, suivant la quatrième condition de Coffman et al., est une cause d'interblocage.

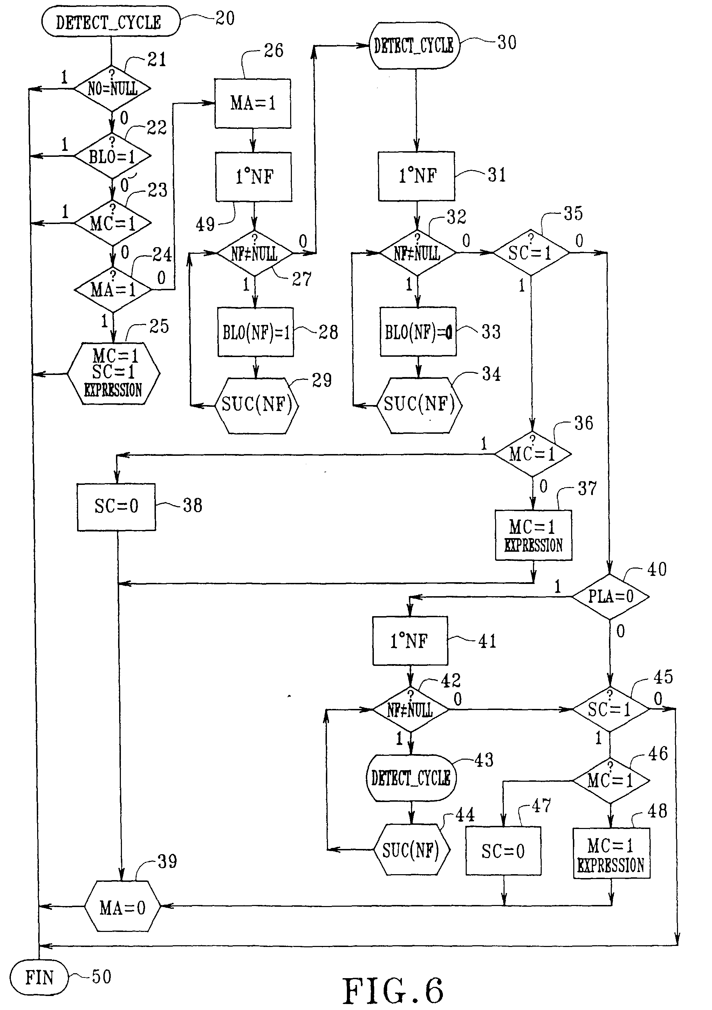

L'outil (10) a pour fonction de traiter automatiquement le résultat de l'outil (9) pour signaler les cycles conformes à la quatrième condition de Coffman et al.. Pour cela, l'outil (10) met en oeuvre l'algorithme dont un organigramme est représenté sur la figure 6.

L'étape (20) est le point d'entrée dans la fonction "Detect_cycle" dont le but, comme son nom l'indique, est de détecter les suites de prises de verrous P(x) cycliques, celles-ci ne pouvant donc pas vérifier une relation d'ordre. Cette fonction s'applique à trois paramètres notés NO, PLA et SC. NO désigne le noeud courant du graphe fourni par l'outil (9); il est initialisé successivement au premier noeud de la première liste de chacun des sous graphes disjoints du graphe fourni par l'outil (9). Un noeud NO est composé de plusieurs champs. Un premier champ contient, à titre non limitatif, une prise de verrou P(x) ou l'indicateur noté NULL qui signifie la fin d'une liste LF de prises de verrous. Le contenu de ce champ est assimilé, dans l'algorithme décrit, à la valeur du paramètre NO. Un second champ contient un pointeur, noté SUIT, vers le successeur du noeud dans la liste LF. Un troisième champ, noté SOURCE, contient le nom du programme source dont est issu la prise de verrou P(x). Un quatrième champ contient un ou plusieurs pointeurs réciproques notés DF, symbolisé par une double flèche sur la figure 5. PLA est un indicateur logique qui vaut 1 lorsque le noeud courant NO de la fonction "Detect_cycle" résulte d'un parcours en aval d'un noeud adressé par un pointeur réciproque DF. Sa valeur et son rôle seront mieux compris à travers son traitement par l'algorithme que nous décrivons à présent. SC est un indicateur logique qui vaut 1 lorsqu'un cycle de prises de verrous est détecté. PLA et SC sont initialisé à la valeur 0.

Chaque noeud NO est affecté de plus de trois variables logiques globales BLO, MC et MA dont la raison sera mieux comprise dans l'explication des étapes (22,23,24). Ces variables sont initialisées à 0 pour l'ensemble des noeuds du graphe fourni par l'outil (9).

L'étape (21) est un test sur la valeur du noeud courant NO. Si NO = NULL, le déroulement de l'algorithme est terminé.

L'étape (22) est un test sur la valeur de la variable BLO affectée au noeud courant NO. BLO est à 1 si le noeud NO est bloqué, la signification bloquée pour un noeud NO sera mieux comprise dans l'explication des étapes (28,33). Si BLO = 1, le déroulement de l'algorithme est terminé.

L'étape (23) est un test sur la valeur de la variable MC affectée au noeud courant NO. MC est à 1 si le noeud NO est marqué comme appartenant à un cycle, la condition d'appartenance à un cycle d'un noeud NO sera mieux comprise dans l'explication des étapes (25,37,48). Si MC = 1, le déroulement de l'algorithme est terminé.

L'étape (24) est un test sur la valeur de la variable MA affectée au noeud courant NO. MA est à 1 si le noeud courant NO a précédemment été scruté par la fonction "Detect_cycle". Ceci signifie donc que le noeud NO est scruté pour la seconde fois par la fonction "Detect_cycle", ce qui traduit un rebouclage dans le parcours du graphe fourni par l'outil (9). C'est pourquoi, si MA = 1, les variables MC et SC du noeud NO sont mises à 1 dans l'étape (25) pour indiquer respectivement que le noeud NO appartient à un cycle et qu'un cycle est détecté; dans ce cas, le déroulement de l'algorithme est terminé. MA est à 0 si le noeud NO est scruté pour la première fois. MA est alors mis à 1 dans l'étape (26) pour indiquer que celui-ci est scruté.

A partir de l'étape (49), deux continuations de parcours suivant la fonction "Detect_cycle" sont successivement envisagées. La première correspond à une continuation vers les noeuds du graphe succédant au noeud NO courant

EP 0 678 811 B1

dans la même liste LF, ce qui correspond à l'appel récursif de la fonction "Detect_cycle" de l'étape (30). La deuxième correspond à une continuation vers le premier noeud NF de type NO, adressé par le premier pointeur DF du noeud courant NO, ce qui correspond à l'appel récursif de la fonction "Detect_cycle" de l'étape (43). Chacune des continuations de parcours correspond respectivement au cas où la prise de verrou P(x) du noeud courant serait d'abord prise par le processus à l'origine de cette prise de verrou dans la liste du noeud courant NO, et au cas où la prise de verrou P(x) du noeud courant serait d'abord prise par le processus à l'origine de cette prise de verrou dans la liste annexe où se trouve le noeud NF. Ces deux cas étant exclusifs l'un de l'autre, aucune prise de verrou ne sera effective en aval du noeud non retenu. C'est pourquoi, à l'étape (49) est considéré le premier noeud NF adressé par un pointeur DF contenu dans le noeud NO. Remarquons à cette occasion que DF adresse la valeur NULL s'il n'existe pas de double flèche à partir du noeud courant NO.

Les étapes (27,28,29) correspondent au cas où le parcours ne se poursuit pas par la liste annexe en aval du premier noeud NF, elles représentent la séquence suivante. Tant que NF est différent de NULL, c'est à dire qu'il existe un noeud successeur NF dans la liste en aval du premier noeud NF, les étapes (28,29) sont exécutées. Dans l'étape (28), la variable BLO affectée au noeud NF est mise à 1 pour indiquer que la prise de verrou de ce noeud ne peut être effective. L'étape (29) positionne le noeud NF sur son successeur. En fin de séquence, la fonction récursive "Detect_cycle" est appelée pour le successeur du noeud courant NO avec les valeurs courantes des paramètres PLA et SC en étape (30). Ces étapes constituent une première boucle (27,28,29) masquant tous les successeurs du noeud NF dans une même liste, avant l'appel récursif de la fonction "Detect_cycle" pour le successeur du noeud NO, dans une étape (30),

A la suite de l'étape (30), au retour de récursivité de la fonction "Detect_cycle", les prises de verrous en aval du noeud NF peuvent à nouveau être effectives. Ceci se traduit par la suite des étapes (32,33,34), duales des étapes (27,28,29). Ces étapes constituent une seconde boucle (32,33,34) démasquant tous les successeurs du noeud NF dans une même liste, après l'appel récursif de la fonction "Detect_cycle" pour le successeur du noeud NO, dans l'étape (30),

Pour mieux comprendre la finalité des étapes (27,28,29) et (32,33,34), regardons leur action sur l'exemple des listes de la figure 5. Dans la première liste en partant de la gauche, plaçons nous sur le noeud NO contenant P(B). En étape (49), le premier pointeur "Double_flèche" que l'outil 9 a ajouté à ce noeud NO, définit le noeud NF de la deuxième liste en partant de la gauche sur la figure 5, noeud NF contenant aussi P(B). Les étapes (27,28,29) mettent alors à un la variable BLO du noeud NF contenant P(B) et de chacun des noeuds NF en aval de celui-ci jusqu'à la fin de la liste, à savoir les noeuds contenant P(C) et P(E). Or, en étape (22), la fonction "Detect_cycle" effectue un retour de récursivité sur un noeud dont la variable BLO est mise à un. Ainsi, lorsqu'en étape (30), la fonction "Detect_cycle" est appelée, pour le successeur du noeud NO de la première liste en partant de la gauche et contenant P(B), c'est à dire pour le noeud NO contenant P(C) dans la première liste en partant de la gauche, le noeud contenant P(C) et ses successeurs dans la deuxième liste en partant de la gauche ne seront pas pris en considération dans les appels récursifs suivants de la fonction "Detect_cycle". Ceci s'interprète de la façon suivante. Si le processus à l'origine de la liste {P(A),P(B), P(C)} effectue la prise de verrou P(B), le processus à l'origine de la liste {P(B),P(C),P(E)} sera en attente sur P(B) et n'effectuera donc pas la prise de verrou P(C) et les suivantes. Il n'est donc pas nécessaire de considérer ces prises de verrous. Après avoir parcouru, en étape (30), la suite de la première liste en partant de la gauche, la variable BLO est remise à zéro dans les étapes (32,33,34) pour permettre le parcours de la liste {P(B),P(C),P(E)} lors d'autres appels de la fonction "Detect_cycle".

L'étape (35) pose la question de savoir si dans la première continuation de parcours, un cycle a été détecté en aval du noeud courant NO. Si c'est le cas, c'est à dire si SC = 1, la question suivante qui se pose est de savoir si ce cycle est rebouclé au niveau du noeud courant NO, auquel cas, les noeuds en amont du noeud courant NO n'appartiennent pas à ce cycle et le signal de détection de cycle SC devra être remis à zéro sur le retour de récursivité de la fonction. La réponse à cette dernière question est apportée par les étapes (36,37,38).

Dans l'étape (36), si MC = 1, c'est sur le noeud courant NO que le cycle a été détecté pour les continuations de parcours en aval, et alors SC est mis à zéro en étape (38). Si MC ≠ 1 ce n'est pas sur le noeud courant NO que le cycle a été détecté pour les continuations de parcours en aval, c'est donc pour un noeud qui se trouve en amont du noeud NO et le signal SC doit être conservé à sa valeur précédente. Par contre, le noeud NO appartient à un cycle, c'est pourquoi MC est mis à 1 dans l'étape (37). Avant le retour de récursivité à l'étape (50), MA est mis à zéro dans l'étape (39) car les passages précédents sur le noeud NO ont permis de détecter un cycle. Tout passage suivant sur le noeud NO appartiendra donc à un autre cycle.

Si, dans l'étape (35), SC = 0, aucun cycle n'a été détecté pour la première continuation de parcours résultant des étapes (27) à (35). La question qui se pose est de savoir si un cycle existe dans la continuation de parcours à travers une liste annexe. La réponse à cette question est apportée par les étapes (40) à (48).

Dans l'étape (40), si NO fait déjà partie du parcours d'une liste annexe, c'est à dire, si PLA = 1, alors il est inutile de parcourir une seconde liste annexe. C'est pourquoi, si PLA≠0, l'étape (45) est directement exécutée.

L'étape (45) pose la question de savoir si dans la première continuation de parcours, un cycle a été détecté en aval du noeud courant NO. Si c'est le cas, c'est à dire si SC = 1, la question suivante qui se pose est de savoir si ce cycle est rebouclé au niveau du noeud courant NO, auquel cas, les noeuds en amont du noeud courant NO n'appartiennent pas à ce cycle et le signal de détection de cycle SC devra être remis à zéro sur le retour de récursivité de la fonction. La réponse à cette dernière question est apportée par les étapes (46,48,47).

Dans l'étape (46), si MC = 1, c'est sur le noeud courant NO que le cycle a été détecté pour les continuations de parcours en aval, et alors SC est mis à zéro en étape (47). Si MC ≠ 1, ce n'est pas sur le noeud courant NO que le cycle a été détecté pour les continuations de parcours en aval, c'est donc pour un noeud qui se trouve en amont du noeud NO et le signal SC doit être conservé à sa valeur précédente. Par contre, le noeud NO appartient à un cycle, c'est pourquoi MC est mis à 1 dans l'étape (48). Avant le retour de récursivité à l'étape (50), MA est mis à zéro dans l'étape (39) car les passages précédents sur le noeud NO ont permis de détecter un cycle. Tout passage suivant sur le noeud NO appartiendra donc à un autre cycle.

Dans l'étape (40), si PLA=0, NO n'est pas de type NF et il est donc intéressant de se positionner sur le noeud adressé par le premier pointeur DF du noeud NO pour obtenir un noeud nommé NF. Les étapes (42,43,44) décrivent la séquence suivante qui traduit le parcours d'une liste annexe en aval du premier noeud NF.

Dans l'étape (42), tant que NF≠NULL, exécuter les étapes (43,44) et sortir vers l'étape (45) en fin de séquence.

L'étape (43) appelle la fonction récursive "Detect_cycle" avec NF pour valeur de noeud, 1 pour valeur de PLA et la valeur précédente de SC.

En étape (44), donner à NF la valeur de son successeur dans la liste de prises de verrous à laquelle il appartient.

En étape (45), si aucun cycle n'est détecté, le retour de récursivité est effectué en étape (50).

Sur l'ensemble de l'algorithme précédemment décrit, chaque fois que la variable MC est mise à 1, c'est à dire dans les étapes (25,37,48), le contenu du premier et du troisième champ du noeud en cours est envoyé à un fichier d'expression. Le fichier d'expression est, à titre d'exemples non limitatifs, un fichier d'affichage sur écran ou un fichier d'impression.

A la détection d'un risque d'interblocage, l'analyseur statique inscrit sur un interface-opérateur les listes de prises de verrous en cause en indiquant au droit des prises de verrous le nom des programmes sources. Ceci permet au programmeur de modifier les programmes sources de façon à éliminer le risque d'interblocage détecté par l'analyseur statique. Dans un exemple de détection d'un interblocage par les prises de verrous P(D) et P(F) dans des listes LF13 et LF14 similaires à celles citées ci-dessus, l'analyseur statique envoie le message suivant:

$$P(C) \rightarrow P(D) \rightarrow P(F) \,;\, P(D) \in S3,\, P(F) \in S5$$

$$P(F) \rightarrow P(B) \rightarrow P(D) \,;\, P(F) \in S4,\, P(D) \in S5$$

Annexe

Algorithme Parcours

Parcours (noeud, liste mère, listes mères en suspens)
{
        Si (noeud == NULL) alors
                { Ajouter la liste mère courante à l'ensemble des listes mères en suspens ;
                        Fin de parcours ;
                }


        Tester le type du noeud
        Cas où le type du noeud est un ND_BRANCH :


                {
                 Parcours (noeud → gauche, liste mère, listes mères en suspens) ;
                 Parcours (noeud → droite, liste mère, listes mères en suspens) ;
                }


        Cas où le type du noeud est un ND_JOIN) :
                {
                Si (noeud → marque == 2) alors
                        Fin de parcours ;
                sinon
                        {
                        noeud → marque ++ ;
                        Parcours (noeud → suite, liste mère, listes mères en suspens) ;
                        noeud → marque -- ;
                        }
                }
        Cas où le type du noeud est un ND_ASSIGN :
                {
                Parcours (noeud → suite, liste mère, listes mères en suspens) ;
                {
        Cas où le type du noeud est un ND_LOCK :
                }

Si 'libération de verrou' alors

    Copie liste mère dans une nouvelle liste de prises de verrous ;

Mise à jour de la liste mère ;

Parcours (noeud → suite, liste mère, listes mères en suspens) ;

    }

Cas où le type du noeud est un ND_CALL :

    {

Parcours (noeud → fonction, liste mère, listes mères en suspens de la fonction) ;

Pour chaque liste en suspens de la fonction faire

        {

        Parcours (noeud → suite, liste mère en suspens de la fonction, listes mère en suspens) ;

        }

    }

}

Au premier noeud du graphe, la fonction sera appelée ainsi :

- liste mère = NULL ;
- liste mère en suspens = NULL
- Parcours (premier noeud du graghe, liste mère, liste mère en suspens);
- ajouter les listes mères de l'ensemble des listes Mères en suspens à la liste des prises de verrous;

## Revendications

1. Analyseur statique (1) des risques de blocage de fonctionnement d'un système, recevant en entrée les fichiers de programmation (2) de ce système et la nomenclature (3) des fonctions primitives de prise et de libération de verrous de ce même système, produisant des messages (4) permettant d'éliminer les risques d'interblocage avant la mise en marche de ce système, analyseur caractérisé en ce qu'il comprend un premier outil (5) qui produit un graphe de contrôle pour chaque fonction d'appel système contenue dans les fichiers de programmation (2), les étapes de ce graphe de contrôle ne comprenant que les fonctions primitives de la nomenclature (3) utilisant des ressources du système, un second outil (6) générant les listes de prises de verrous pour l'ensemble des synchronisations possibles des différents processus du système, et en ce que le second outil (6) met en oeuvre un algorithme de parcours des graphes produits par le premier outil (5), cet algorithme faisant appel à une fonction récursive "Parcours" s'appliquant à au moins deux paramètres, le noeud courant du graphe parcouru, la liste mère LM des verrous pris et non libérés pour les noeuds du graphe précédemment parcourus, et en ce que, à chaque rencontre d'un noeud contenant une libération de verrous la liste mère LM telle qu'existante avant la rencontre de ce noeud, est mémorisée dans une liste fille figée LF.

2. Analyseur statique des risques de blocage de fonctionnement d'un système suivant la revendication 1, caractérisé en ce que chaque noeud de raccordement NJ contient la mémorisation de toutes les listes mères LM différentes générées par la fonction "Parcours" aux passages précédents sur ce noeud, et en ce que la fonction "Parcours" effectue un retour de récursivité si la liste mère LM courante est égale à l'une des listes mères LM mémorisées.

3. Analyseur statique des risques de blocage de fonctionnement d'un système suivant la revendication 1, caractérisé en ce qu'il comprend de plus un troisième outil (9) générant un graphe de prises de verrous en reliant, par un pointeur réciproque DF, au moins deux éléments des listes filles LF produites par le second outil (6), contenant la même prise de verrou.

4. Analyseur statique des risques de blocage de fonctionnement d'un système suivant la revendication 3, caractérisé en ce qu'il comprend de plus un quatrième outil (10) éditant, à l'aide d'une fonction récursive "Detect_cycle", les cycles du graphe de prises de verrous produit par le troisième outil (9), la fonction "Detect_cycle" s'appliquant à au moins deux paramètres NO et SC, NO étant un noeud du graphe produit par le troisième outil (9) et SC étant un indicateur signalant chaque fois que, dans son exécution récursive, la fonction "Detect_cycle" est repassée par un même noeud NO.

5. Analyseur statique des risques de blocage de fonctionnement d'un système suivant la revendication 4, caractérisé en ce que la fonction "Detect_cycle" comprend:

- une étape (49) définissant un noeud NF comme le premier adressé par le pointeur réciproque DF contenu dans le noeud NO,
- une première boucle (27,28,29) masquant tous les successeurs du noeud NF dans une même liste, avant l'appel récursif de la fonction "Detect_cycle" pour le successeur du noeud NO, dans une étape (30),
- une seconde boucle (32,33,34) démasquant tous les successeurs du noeud NF dans une même liste, après l'appel récursif de la fonction "Detect_cycle" pour le successeur du noeud NO, dans l'étape (30),
- une étape (43) d'appel récursif de la fonction "Detect_cycle" pour le noeud NF.

6. Analyseur statique des risques de blocage de fonctionnement d'un système suivant la revendication 4, caractérisé en ce que la fonction récursive "Detect_cycle" s'applique de plus à un paramètre PLA indiquant si l'exécution courante de la fonction s'applique à plus d'une liste fille LF telle que fournie par le premier outil (5), le second outil (6) ou le troisième outil (9).

7. Analyseur statique des risques de blocage de fonctionnement d'un système suivant l'une des revendications précédentes, caractérisé en ce que chaque noeud NL, contenant une prise de verrou, contient de plus le nom du programme source à l'origine de cette prise de verrou.

**Patentansprüche**

1. Statischer Analysator (1) von Betriebsblockierungsrisiken eines Systems, der am Eingang Programmdateien (2) dieses Systems und die Nomenklatur (3) von primitiven Funktionen zum Setzen und Freigeben von Sperren dieses Systems empfängt und Nachrichten (4) erzeugt, die die Beseitigung der Verklemmungsrisiken vor dem Einschalten dieses Systems ermöglichen, wobei der Analysator dadurch gekennzeichnet ist, daß er versehen ist mit einem ersten Werkzeug (5), das einen Steuergraphen für jede in den Programmdateien (2) enthaltene Systemaufruffunktion erzeugt, wobei die Stufen dieses Steuergraphen nur die primitiven Funktionen der Nomenklatur (3), die die Systembetriebsmittel nutzen, umfassen, und einem zweiten Werkzeug (6), das die Listen der Setzung von Sperren für die Gesamtheit der möglichen Synchronisationen der verschiedenen Prozesse des Systems erzeugt, und daß das zweite Werkzeug (6) einen Algorithmus zum Durchlaufen der Graphen ausführt, die vom ersten Werkzeug (5) erzeugt werden, wobei dieser Algorithmus eine rekursive Funktion "Durchlauf" verwendet, die auf wenigstens zwei Parameter angewendet wird, den momentan durchlaufenen Knoten des Graphen und die Mutterliste LM der gesetzten und nicht freigegebenen Sperren für die vorher durchlaufenen Knoten des Graphen, und daß bei jedem Antreffen eines eine Sperrenfreigabe enthaltenden Knotens die Mutterliste LM so, wie sie vor dem Antreffen dieses Knotens vorhanden war, in einer starren Tochterliste LF gespeichert wird.

2. Statischer Analysator von Betriebsblockierungsrisiken eines Systems nach Anspruch 1, dadurch gekennzeichnet, daß jeder Verbindungsknoten NJ die Speicherung sämtlicher unterschiedlicher Mutterlisten LM enthält, die von der "Durchlauf"-Funktion in den vorhergehenden Durchgängen durch diesen Knoten erzeugt wurden, und daß die "Durchlauf"-Funktion eine Rekursivitätsrückkehr ausführt, falls die momentane Mutterliste LM gleich einer der gespeicherten Mutterlisten LM ist.

3. Statischer Analysator von Betriebsblockierungsrisiken eines Systems nach Anspruch 1, dadurch gekennzeichnet, daß er außerdem ein drittes Werkzeug (9) enthält, das einen Graphen von gesetzten Sperren erzeugt, indem es mittels eines reziproken Zeigers DF wenigstens zwei Elemente der Tochterlisten LF verbindet, die vom zweiten Werkzeug (6) erzeugt werden und die gleiche Sperrensetzung enthalten.

4. Statischer Analysator von Betriebsblockierungsrisiken eines Systems nach Anspruch 3, dadurch gekennzeichnet, daß er außerdem ein viertes Werkzeug (10) enthält, das mit Hilfe einer rekursiven Funktion "Detect_cycle" die Zyklen des Sperrensetzungsgraphen, der vom dritten Werkzeug (9) erzeugt wird, editiert, wobei die Funktion "Detect_cycle" auf wenigstens zwei Parameter NO und SC angewendet wird, wobei NO ein Knoten des Graphen ist, der vom dritten Werkzeug (9) erzeugt wird, und SC ein Hinweis ist, der jedesmal meldet, wenn die Funktion "Detect_cycle" bei ihrer rekursiven Ausführung erneut durch denselben Knoten NO geht.

5. Statischer Analysator von Betriebsblockierungsrisiken eines Systems nach Anspruch 4, dadurch gekennzeichnet, daß die Funktion "Detect_cycle" enthält:

   - einen Schritt (49), der einen Knoten NF als ersten Knoten definiert, der durch den im Knoten NO enthaltenen reziproken Zeiger DF adressiert wird,
   - eine erste Schleife (27, 28, 29), die sämtliche Nachfolger des Knotens NF in derselben Liste vor dem rekursiven Aufruf der Funktion "Detect_cycle" für den Nachfolger des Knotens NO in einem Schritt (30) maskiert,
   - eine zweite Schleife (32, 33, 34), die sämtliche Nachfolger des Knotens NF in derselben Liste nach einem rekursiven Aufruf der Funktion "Detect cycle" für den Nachfolger des Knotens NO im Schritt (30) demaskiert,
   - einen Schritt (43) des rekursiven Aufrufens der Funktion "Detect_cycle" für den Knoten NF.

6. Statischer Analysator von Betriebsblockierungsrisiken eines Systems nach Anspruch 4, dadurch gekennzeichnet, daß die rekursive Funktion "Detect_cycle" außerdem auf einen Parameter PLA angewendet wird, der angibt, ob die momentane Ausführung der Funktion auch auf eine Tochterliste LF angewendet wird, wie sie vom ersten Werkzeug (5), vom zweiten Werkzeug (6) oder vom dritten Werkzeug (9) geliefert wird.

7. Statischer Analysator von Betriebsblockierungsrisiken eines Systems nach einem der vorangehenden Ansprüche, dadurch gekennzeichnet, daß jeder Knoten NL, der eine Sperrensetzung enthält, außerdem den Namen des Quellprogramms am Ausgangspunkt dieser Sperrensetzung enthält.

**Claims**

1. Static analyser (1) of the risks of locking the operation of a system, receiving as an input the programming files (2) of this system and the nomenclature (3) of the primitive functions of setting and releasing locks on this same system, producing messages (4) making it possible to eliminate the risks of deadlock before the starting of this system, which analyser is characterised in that it comprises a first tool (5), which produces a control graph for each system call function contained in the programming files (2), the stages of this control graph comprising only the primitive functions of the nomenclature (3) using the resources of the system, a second tool (6) generating the lists of locks set for all the possible synchronisations of the various processes of the system, and in that the second tool (6) uses an algorithm for scanning the graphs produced by the first tool (5), this algorithm calling on a recursive "Scan" function applying to at least two parameters, the current node of the scanned graph, the mother list LM of locks set and not released for the nodes of the graph previously scanned, and in that, at each encounter of a node containing a lock release, the mother list LM as it exists before the encounter of this node is stored in a fixed daughter list LF.

2. Static analyser of the risks of locking the operation of a system according to Claim 1, characterised in that each connection node NJ contains in storage all the different mother lists LM generated by the "Scan" function on previous passages over this node and in that the "Scan" function effects a recursion return if the current mother list LM is equal to one of the stored mother lists LM.

3. Static analyser of the risks of locking the operation of a system according to Claim 1, characterised in that it also comprises a third tool (9) generating a graph of locks set by connecting, using a reciprocal pointer DF, at least two elements from the daughter lists LF produced by the second tool (6), containing the same lock setting.

4. Static analyser of the risks of locking the operation of a system according to Claim 3, characterised in that it also comprises a fourth tool (10) editing, by means of a recursive "Detect_cycle" function, the cycles of the graph of locks set produced by the third tool (9), the "Detect_cycle" function applying to at least two parameters NO and SC, NO being a node of the graph produced by the third tool (9) and SC being an indicator signalling each time that, in its recursive execution, the "Detect_cycle" function is re-run by the same node NO.

**5.** Static analyser of the risks of locking the operation of a system according to Claim 4, characterised in that the "Detect_cycle" function comprises:

- a stage (49) defining a node NF as the first one addressed by the reciprocal pointer DF contained in the node NO,
- a first loop (27, 28, 29) masking all the successors of the node NF in the same list, before the recursive calling of the "Detect-cycle" function for the successor of the node NO, in a stage (30),
- a second loop (32, 33, 34) unmasking all the successors of the node NF in the same list, after the recursive calling of the "Detect_cycle" function for the successor of the node NO, in the stage (30),
- a recursive calling stage (43) of the "Detect_cycle" function for the node NF.

**6.** Static analyser of the risks of locking the operation of a system according to Claim 4, characterised in that the recursive "Detect_cycle" function also applies to a parameter PLA indicating whether the current execution of the function applies to more than one daughter list LF as supplied by the first tool (5), the second tool (6) or the third tool (9).

**7.** Static analyser of the risks of locking the operation of a system according to one of the preceding claims, characterised in that each node NL, containing a lock setting, also contains the name of the source program at the origin of this lock setting.

FIG.1

FIG.2

FIG.3

**FIG.4**

**FIG.5**

FIG.6